# EUROPÄISCHE PATENTSCHRIFT

(11) **EP 3 051 371 B1**
(45) Veröffentlichungstag und Bekanntmachung des Hinweises auf die Patenterteilung: **17.01.2018**
(21) Anmeldenummer: 15153033.4
(22) Anmeldetag: 29.01.2015
(51) Int. Cl.: G05B 19/418, H04L 12/02

(54) **Verfahren zum Aufbau einer unterbrechungsfreien Kommunikationsverbindung und Kommunikationsgerät**
Method for establishing an uninterruptible communication connection and communication device
Procédé d'établissement d'une liaison de communication sans interruption et appareil de communication

(43) Veröffentlichungstag der Anmeldung: 03.08.2016
(73) Patentinhaber: Siemens Aktiengesellschaft, 80333 München (DE)
(72) Erfinder: Albrecht, Dr. Harald, 90475 Nürnberg (DE)

(56) Entgegenhaltungen:
- EP-A2- 1 770 458
- US-A1- 2008 310 323

## Beschreibung

Industrielle Automatisierungssysteme dienen zur Überwachung, Steuerung und Regelung von technischen Prozessen, insbesondere im Bereich Fertigungs-, Prozess- und Gebäudeautomatisierung, und ermöglichen einen Betrieb von Steuerungseinrichtungen, Sensoren, Maschinen und industriellen Anlagen, der möglichst selbständig und unabhängig von menschlichen Eingriffen erfolgen soll. Aufgrund einer ständig steigenden Bedeutung von Informationstechnik für Automatisierungssysteme, die zahlreiche vernetzte Steuerungs- bzw. Rechnereinheiten umfassen, gewinnen Verfahren zur zuverlässigen Bereitstellung von über ein Automatisierungssystem verteilten Funktionen für eine Bereitstellung von Überwachungs-, Steuerungs- und Regelungsfunktionen verstärkt an Bedeutung.

Unterbrechungen von Kommunikationsverbindungen zwischen Rechnereinheiten eines industriellen Automatisierungssystems oder Automatisierungsgeräten können zu einer unerwünschten oder unnötigen Wiederholung einer Übermittlung einer Dienstanforderung führen. Dies verursacht eine zusätzliche Auslastung von Kommunikationsverbindungen des industriellen Automatisierungssystems, was zu weiteren Systemstörungen oder -fehlern führen kann. Außerdem können nicht oder nicht vollständig übermittelte Nachrichten beispielsweise einen Übergang oder Verbleib eines industriellen Automatisierungssystems in einen sicheren Betriebszustand verhindern. Dies kann schließlich zu einem Ausfall einer kompletten Produktionsanlage und einem kostspieligen Produktionsstillstand führen. Eine besondere Problematik resultiert in industriellen Automatisierungssystemen regelmäßig aus einem Meldungsverkehr mit verhältnismäßig vielen, aber relativ kurzen Nachrichten, wodurch obige Probleme verstärkt werden.

In EP 1 770 458 A2 ist ein industrielles Automatisierungssystem mit zumindest einer speicherprogrammierbaren Steuerungseinheit beschrieben, bei dem eine Konfigurationseinheit zur Konfiguration der Steuerungseinheit und zur Bekanntgabe ihrer Verfügbarkeit an einem Kommunikationsnetz vorgesehen ist. Die Konfigurationseinheit weist der Steuerungseinheit dabei eine eindeutige Kommunikationsnetzadresse zu, die beispielsweise eine IPv6-Adresse sein kann. Auf diese Weise kann die Steuerungseinheit automatisch in Betrieb genommen werden.

US 2008/310323 A1 betrifft ein Verfahren zum Durchführen einer DNS-Aktualisierung (Domain Name System) in einem Kommunikationsnetz für paketorientierte Datenübermittlung, bei dem ein Kommunikationsgerät eine Router-Solicitation-Anfrage sendet, die zur Stateless Address Autoconfiguration (SLAAC) dient. Hierauf empfängt das Kommunikationsgerät ein IPv6-Präfix sowie eine Neighbour-Solicitation-Anfrage. Auf diese Weise wird vom Kommunikationsgerät eine Neighbour-Advertisement-Nachricht abgerufen, wenn eine DNS-Aktualisierung durchgeführt werden soll. Bei Empfang der Neighbour-Advertisement-Nachricht des Kommunikationsgeräts, die eine Adresse oder einen Schnittstellenidentifikator des Kommunikationsgeräts umfasst, wird Kommunikationsnetz-Vorgang für eine DNS-Aktualisierung initiiert.

Aus EP 2 955 904 B1 ist ein Verfahren zur Vergabe von Kommunikationsnetzadressen für Netzteilnehmer eines segmentierten Netzes mit mehreren Subnetzen bekannt. Die Subnetze sind jeweils über einen Subnetz-Router an ein sie verbindendes Sammelnetz angeschlossen. Dabei wird von den Subnetz-Routern durch einen Austausch von über das Sammelnetz verteilten Router-Nachrichten dezentral ein gemeinsamer Adressbereich ermittelt, und innerhalb des Adressbereichs werden Kommunikationsnetzadressen für die Netzteilnehmer festgelegt.

Insbesondere in IPv6-Kommunikationsnetzen stellen Änderungen von Kommunikationsnetzadressen im Rahmen eines "Network Renumbering" grundsätzlich vorgesehene Vorgänge dar. Zudem können IPv6-Kommunikationsgeräte mehrere zugeordnete Kommunikationsnetzadressen gleichzeitig verwalten, die jeweils eine definierte Lebensdauer aufweisen. Bei einer bestehenden gesicherten Verbindung zwischen einem Kommunikationsgerät innerhalb eines industriellen Kommunikationsnetzes und einem Kommunikationsgerät außerhalb des industriellen Kommunikationsnetzes kann eine Änderung einer Kommunikationsnetzadresse eines der beiden Kommunikationsgeräte zu einer temporären Unterbrechung führen, die weitere Störungen nach sich ziehen kann.

In EP 3 001 647 A1 ist ein Verfahren zum Aufbau einer gesicherten Kommunikationsverbindung zu einem mit einem industriellen Automatisierungssystem verbundenen Kommunikationsgerät beschrieben, bei dem eine gesicherte Kommunikationsverbindung zwischen einem ersten Kommunikationsgerät und einem zweiten Kommunikationsgerät über ein ungesichertes erstes Teilnetz aufgebaut wird. Die gesicherte Kommunikationsverbindung kann beispielsweise ein Virtual Private Network Tunnel sein. Das zweite Kommunikationsgerät ist zusätzlich an ein gesichertes zweites Teilnetz angeschlossen, das dem industriellen Automatisierungssystem zugeordnet ist. Eine dem zweiten Kommunikationsgerät zugeordnete Überwachungseinheit überprüft, ob eine neue dem zweiten Kommunikationsgerät für eine Verbindung zum ersten Teilnetz zugeordnete Kommunikationsnetzadresse gültig wird.

Entsprechend dem in EP 3 001 647 A1 beschriebenen Verfahren übermittelt die Überwachungseinheit bei einem Wechsel einer dem zweiten Kommunikationsgerät für eine Verbindung zum ersten Teilnetz zugeordneten Kommunikationsnetzadresse und einer noch bestehenden gesicherten Kommunikationsverbindung zwischen dem ersten und dem zweiten Kommunikationsgerät eine Adresswechselankündigung über die bestehende gesicherte Kommunikationsverbindung an das erste Kommunikationsgerät. Bei Empfang einer Adresswechselankündigung leitet das erste Kommunikationsgerät einen Aufbau einer zusätzlichen gesicherten Kommunikationsverbindung zwischen dem ersten und dem zweiten Kommunikationsgerät über das erste Teilnetz ein. Sobald die zusätzliche gesicherte Kommunikationsverbindung aufgebaut und eingerichtet ist, schließt das erste Kommunikationsgerät eine Umschaltung von der bestehenden gesicherten Kommunikationsverbindung auf die zusätzliche gesicherte Kommunikationsverbindung ab.

Der vorliegenden Erfindung liegt daher die Aufgabe zugrunde, ein einfach zu realisierendes Verfahren zum Aufbau einer unterbrechungsfreien Kommunikationsverbindung zu schaffen, das einen im wesentlichen kontinuierlichen Betrieb bei Änderungen von Kommunikationsnetzadressen während bestehender Verbindungen ermöglicht, sowie geeignete Vorrichtungen zu dessen Durchführung anzugeben.

Diese Aufgabe wird erfindungsgemäß durch ein Verfahren mit den in Anspruch 1 angegebenen Merkmalen und durch ein Kommunikationsgerät mit den in Anspruch 18 angegebenen Merkmalen gelöst. Vorteilhafte Weiterbildungen der vorliegenden Erfindung sind in den abhängigen Patentansprüchen angegeben.

Entsprechend dem erfindungsgemäßen Verfahren zum Aufbau einer unterbrechungsfreien Kommunikationsverbindung mit einem Kommunikationsgerät, das einem industriellen Automatisierungssystem zugeordnet ist, wird eine erste Kommunikationsverbindung zwischen einem ersten Kommunikationsgerät und einem zweiten Kommunikationsgerät entsprechend einem Übertragungssteuerungsprotokoll unter Verwendung einer dem ersten Kommunikationsgerät zugeordneten ersten Kommunikationsnetzadresse aufgebaut. Sowohl das erste Kommunikationsgerät als auch das zweite Kommunikationsgerät oder nur eines der beiden Kommunikationsgeräte können dem industriellen Automatisierungssystem zugeordnet sein. Eine dem ersten Kommunikationsgerät zugeordnete Überwachungseinheit überprüft auf Basis eines Namensauflösungsprotokolls, ob eine zweite dem ersten Kommunikationsgerät zugeordnete Kommunikationsnetzadresse gültig wird. Die Überwachungseinheit kann beispielsweise in das erste Kommunikationsgerät, in einen dem ersten Kommunikationsgerät zugeordneten Router oder in ein dem ersten Kommunikationsgerät zugeordnetes Gateway integriert sein.

Erfindungsgemäß initiiert die Überwachungseinheit bei Zuordnung einer zweiten gültigen Kommunikationsnetzadresse und bestehender erster Kommunikationsverbindung einen Aufbau einer zusätzlichen zweiten Kommunikationsverbindung zwischen einer dem ersten Kommunikationsgerät zugeordneten Transport- bzw. Vermittlungsfunktionseinheit und dem zweiten Kommunikationsgerät. Die erste Kommunikationsverbindung bzw. die zweite Kommunikationsverbindung können beispielsweise entsprechend einem verbindungsorientierten Verbindungssteuerungsprotokoll aufgebaut werden, insbesondere entsprechend Transmission Control Protocol (TCP). Vorzugsweise umfasst die Transport- bzw. Vermittlungsfunktionseinheit eine Multipath-TCP-Funktionalität. Die dem ersten Kommunikationsgerät zugeordnete Transport- bzw. Vermittlungsfunktionseinheit baut die zweite Kommunikationsverbindung unter Verwendung der dem ersten Kommunikationsgerät zugeordneten zweiten Kommunikationsnetzadresse auf. Die erste Kommunikationsverbindung wird bei einem erfolgreichen Aufbau der zweiten Kommunikationsverbindung abgebaut.

Das erfindungsgemäße Verfahren ermöglicht eine transparente, stoßfreie Nutzung von Multipath-TCP/IP-Verbindungen bei einem "Network Renumbering" durch auf den beiden Kommunikationsgeräten ablaufende Steuerungsprogramme, ohne dass hierzu zusätzliche Maßnahmen auf Anwendungs- oder Sitzungsebene oder Maßnahmen zum Aufbau gesicherter Kommunikationsverbindungen, wie VPN-Tunnel (Virtual Private Network), erforderlich sind. Insbesondere können hierbei Provider Aggregatable IPv6-Adressen genutzt, so dass eine Notwendigkeit für Provider Independent IPv6-Adressen entfällt, die nicht unbedingt jedem Anwender zur Verfügung stehen. Darüber hinaus ist das erfindungsgemäße Verfahren durch Verwendung etablierter Konzepte, wie Multipath-TCP und Dynamic Domain Name System (Dynamic DNS), relativ einfach realisierbar und in bestehende Infrastruktur integrierbar.

Entsprechend einer bevorzugten Weiterbildung des erfindungsgemäßen Verfahrens ist die Transport- bzw. Vermittlungsfunktionseinheit zur Verarbeitung eines Internetprotokollstapels ausgestaltet und eingerichtet ist. Insbesondere kann die Transport- bzw. Vermittlungsfunktionseinheit in das erste Kommunikationsgerät integriert sein und über einen Kommunikationsnetzadapter-Treiber auf einen Kommunikationsnetzadapter des ersten Kommunikationsgeräts zugreifen. Dabei kann der Kommunikationsnetzadapter beispielsweise eine Sende- und Empfangseinheit und eine Steuerungseinheit zur Koordination eines Zugriffs auf ein Kommunikationsmedium umfassen.

Entsprechend einer alternativen Ausgestaltung des erfindungsgemäßen Verfahrens kann die Transport- bzw. Vermittlungsfunktionseinheit in einen dem ersten bzw. zweiten Kommunikationsgerät zugeordneten Router oder in ein dem ersten bzw. zweiten Kommunikationsgerät zugeordnetes Gateway integriert sein. In diesem Fall agiert der Router bzw. das Gateway als Proxy für das jeweilige Kommunikationsgerät und verwaltet beispielsweise Multipath-TCP-Verbindungen für das Kommunikationsgerät, die vom Router bzw. Gateway als einfache Verbindungen zum Kommunikationsgerät weitergeführt werden.

Vorteilhafterweise ist der Überwachungseinheit entsprechend einer weiteren Ausgestaltung der vorliegenden Erfindung eine Namensauflösungseinheit zugeordnet ist, die anhand eines Namensauflösungsdienstes fortlaufend überprüft, ob eine zweite dem ersten Kommunikationsgerät zugeordnete Kommunikationsnetzadresse gültig wird. Der Namensauflösungsdienst wird dabei beispielsweise durch zumindest einen Domain Name System Server bereitgestellt. In diesem Fall ist die Namensauflösungseinheit ein DNS-Client, der vorzugsweise eine Änderung eines dem ersten Kommunikationsgerät zugeordneten IPv6-Präfix überwacht. Bei einer Änderung des IPv6-Präfix kann die Überwachungseinheit somit den Aufbau der zusätzlichen zweiten Kommunikationsverbindung initiieren.

Entsprechend einer besonders bevorzugten Ausgestaltung ist das zweite Kommunikationsgerät im wesentlichen wie das erste Kommunikationsgerät ausgestaltet und eingerichtet. Dabei wird die erste Kommunikationsverbindung unter Verwendung einer dem zweiten Kommunikationsgerät zugeordneten ersten Kommunikationsnetzadresse aufgebaut. Außerdem überprüft in diesem Fall eine dem zweiten Kommunikationsgerät zugeordnete Überwachungseinheit, ob eine zweite dem zweiten Kommunikationsgerät zugeordnete Kommunikationsnetzadresse gültig wird, und initiiert bei einer Adress- bzw. Gültigkeitsänderung einen Aufbau einer zusätzlichen zweiten Kommunikationsverbindung. Des weiteren baut eine dem zweiten Kommunikationsgerät zugeordnete Transport- bzw. Vermittlungsfunktionseinheit bei einer Adress- bzw. Gültigkeitsänderung die zweite Kommunikationsverbindung unter Verwendung der dem zweiten Kommunikationsgerät zugeordneten zweiten Kommunikationsnetzadresse auf.

Vorzugsweise überprüft die dem ersten Kommunikationsgerät zugeordnete Überwachungseinheit nur bei einem durch das erste Kommunikationsgerät initiierten Aufbau der ersten Kommunikationsverbindung, ob eine zweite dem ersten Kommunikationsgerät zugeordnete Kommunikationsnetzadresse bzw. eine zweite dem zweiten Kommunikationsgerät zugeordnete Kommunikationsnetzadresse gültig wird, und initiiert gegebenenfalls einen Aufbau einer zusätzlichen zweiten Kommunikationsverbindung. In analoger Weise überprüft die dem zweiten Kommunikationsgerät zugeordnete Überwachungseinheit vorteilhafterweise nur bei einem durch das zweite Kommunikationsgerät initiierten Aufbau der ersten Kommunikationsverbindung, ob eine zweite dem ersten Kommunikationsgerät zugeordnete Kommunikationsnetzadresse bzw. eine zweite dem zweiten Kommunikationsgerät zugeordnete Kommunikationsnetzadresse gültig wird, und initiiert gegebenenfalls einen Aufbau einer zusätzlichen zweiten Kommunikationsverbindung. Entsprechend einer alternativen Ausgestaltung der vorliegenden Erfindung kann die Überwachungseinheit, die dem die erste Kommunikationsverbindung initiierenden aktiven Kommunikationsgerät zugeordnet ist, auch durch die Überwachungseinheit, die dem jeweils anderen passiven Kommunikationsgerät zugeordnet ist, über eine das passive Kommunikationsgerät betreffende Adress- bzw. Gültigkeitsänderung benachrichtigt werden.

Das erfindungsgemäße Kommunikationsgerät ist zur Durchführung eines Verfahrens entsprechend vorangehenden Ausführungen vorgesehen und weist zumindest eine Sende- und Empfangseinheit sowie zumindest eine Steuerungseinheit zur Koordination eines Zugriffs auf ein Kommunikationsmedium auf. Außerdem umfasst das erfindungsgemäße Kommunikationsgerät eine Überwachungseinheit für eine Überprüfung auf Basis eines Namensauflösungsprotokolls, ob eine neue bzw. zusätzliche dem Kommunikationsgerät zugeordnete Kommunikationsnetzadresse gültig wird. Dabei ist die Überwachungseinheit dafür eingerichtet und ausgestaltet, bei Zuordnung einer neuen bzw. zusätzlichen gültigen Kommunikationsnetzadresse und einer bestehenden Kommunikationsverbindung mit einem ausgewählten Kommunikationsgerät einen Aufbau einer zusätzlichen Kommunikationsverbindung zwischen einer dem Kommunikationsgerät zugeordneten Transport- bzw. Vermittlungsfunktionseinheit und dem ausgewählten Kommunikationsgerät zu initiieren. Darüber hinaus umfasst das erfindungsgemäße Kommunikationsgerät eine Transport- bzw. Vermittlungsfunktionseinheit, die dafür eingerichtet und ausgestaltet ist, die zusätzliche Kommunikationsverbindung unter Verwendung der dem Kommunikationsgerät zugeordneten neuen bzw. zusätzlichen Kommunikationsnetzadresse aufzubauen und die vorher bestehende Kommunikationsverbindung bei einem erfolgreichen Aufbau der zusätzlichen Kommunikationsverbindung abzubauen.

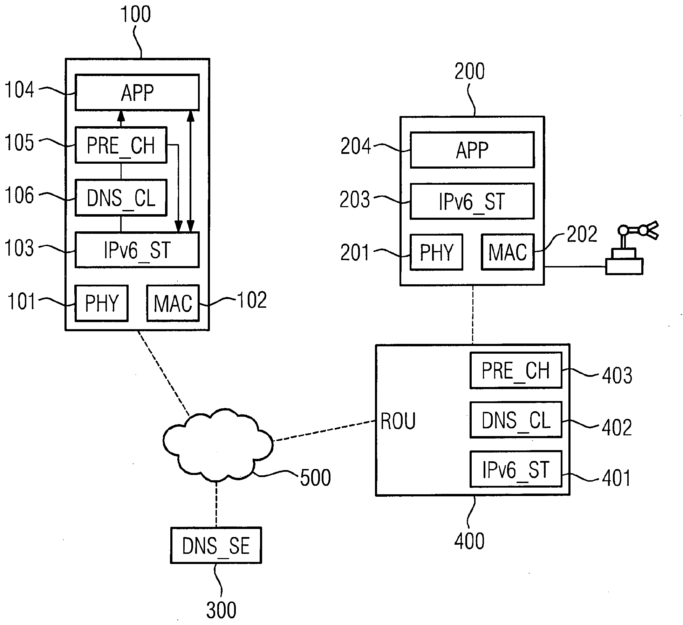

Die vorliegende Erfindung wird nahfolgend an einem Ausführungsbeispiel anhand der Zeichnung näher beschrieben. Es zeigt die
- Figur: ein industrielles Automatisierungssystem mit einem Engineering-System als Anfangspunkt einer Kommunikationsverbindung und einem Automatisierungsgerät als Endpunkt der Kommunikationsverbindung.

Das in der Figur dargestellte industrielle Automatisierungssystem umfasst entsprechend dem vorliegenden Ausführungsbeispiel zumindest ein Engineering-System 100 zur Projektierung und Überwachung von Automatisierungsgeräten, ein exemplarisches Automatisierungsgerät 200, einen DNS-Server (Domain Name System) 300 und einem dem Automatisierungsgerät 200 zugeordneten Router 400. Das Engineering-System 100, das Automatisierungsgerät 200, der DNS-Server 300 und der Router 400 sind über ein industrielles Kommunikationsnetz 500 miteinander verbunden.

Das Engineering-System 100 umfasst ein Kommunikationsgerät mit einer durch eine PHY-Funktionseinheit realisierten Sende- und Empfangseinheit 101, einer durch eine MAC-Funktionseinheit realisierten Steuerungseinheit 102 zur Koordination eines Zugriffs auf ein Kommunikationsmedium sowie eine Überwachungseinheit 105 für eine Überprüfung auf Basis eines Namensauflösungsprotokolls, ob eine neue bzw. zusätzliche dem Engineering-System 100 zugeordnete IPv6-Adresse gültig wird. Der Überwachungseinheit 105 ist hierzu ein DNS-Client 106 zugeordnet, der anhand eines durch den DNS-Server 300 bereitgestellten Namensauflösungsdienstes fortlaufend überprüft, ob eine neue dem Engineering-System zugeordnete IPv6-Adresse gültig wird, und die Überwachungseinheit 105 entsprechend benachrichtigt.

Außerdem umfasst das Kommunikationsgerät des Engineering-Systems 100 eine Transport- und Vermittlungsfunktionseinheit 103 zur Verarbeitung eines TCP/IP-Protokollstapels, die eine Multipath-TCP-Funktionalität aufweist und für zumindest ein auf dem Engineering-System 100 ablaufendes Steuerungsprogramm 104 einen verbindungsorientierten TCP/IP-Transportdient bereitstellt. Die Transport- und Vermittlungsfunktionseinheit 103 greift über einen Kommunikationsnetzadapter-Treiber auf die Sende- und Empfangseinheit 101 und die Steuerungseinheit 102 zur Koordination eines Kommunikationsmedium-Zugriffs zu.

Das Automatisierungsgerät 200 kann beispielsweise eine speicherprogrammierbare Steuerung oder ein Feldgerät sein und umfasst im vorliegenden Ausführungsbeispiel ein Kommunikationsgerät, das im wesentlichen wie das Kommunikationsgerät des Engineering-Systems 100 ausgestaltet und eingerichtet ist. Insbesondere umfasst das Kommunikationsgerät des Automatisierungsgeräts 200 eine durch eine PHY-Funktionseinheit realisierte Sende- und Empfangseinheit 201, eine durch eine MAC-Funktionseinheit realisierte Steuerungseinheit 202 zur Koordination eines Zugriffs auf ein Kommunikationsmedium sowie eine Transport- und Vermittlungsfunktionseinheit 203 zur Verarbeitung eines TCP/IP-Protokollstapels. Die Transport- und Vermittlungsfunktionseinheit 203 stellt für zumindest ein auf dem Automatisierungsgerät 200 ablaufendes Steuerungsprogramm 204 einen verbindungsorientierten TCP/IP-Transportdient bereit.

Im vorliegenden Ausführungsbeispiel wird zwischen dem Engineering-System 100 und dem Automatisierungsgerät 200 eine erste Kommunikationsverbindung entsprechend Transmission Control Protocol unter Verwendung einer dem Engineering-System 100 zugeordneten ersten Kommunikationsnetzadresse und einer dem Automatisierungsgerät 200 zugeordneten ersten Kommunikationsnetzadresse aufgebaut. Bei einem durch das Engineering-System 100 initiierten Aufbau der ersten Kommunikationsverbindung überprüft die dem Engineering-System 100 zugeordnete Überwachungseinheit 105 fortlaufend, ob eine zweite dem Engineering-System 100 zugeordnete IPv6-Adresse bzw. eine zweite dem Automatisierungsgerät 200 zugeordnete IPv6-Adresse gültig wird.

Bei Zuordnung einer zweiten gültigen IPv6-Adresse, insbesondere aufgrund einer IPv6-Präfixänderung, und bestehender erster Kommunikationsverbindung initiiert die Überwachungseinheit 105 des Engineering-Systems 100 einen Aufbau einer zusätzlichen zweiten Kommunikationsverbindung zwischen der Transport- und Vermittlungsfunktionseinheit 103 des Engineering-Systems 100 und der Transport- und Vermittlungsfunktionseinheit 203 des Automatisierungsgeräts 200. Auch die zweite Kommunikationsverbindung wird entsprechend Transmission Control Protocol aufgebaut. Die dem Engineering-System 100 zugeordnete Transport- und Vermittlungsfunktionseinheit 103 baut die zweite Kommunikationsverbindung unter Verwendung der dem Engineering-System 100 bzw. Automatisierungsgerät 200 zugeordneten zweiten IPv6-Adresse auf. Bei einem erfolgreichen Aufbau der zweiten Kommunikationsverbindung wird die erste Kommunikationsverbindung durch die Transport- und Vermittlungsfunktionseinheit 103 des Engineering-Systems 100 abgebaut.

Bei einem durch das Automatisierungsgerät 200 initiierten Aufbau der ersten Kommunikationsverbindung überprüft dagegen eine dem Automatisierungsgerät 200 zugeordnete Überwachungseinheit, ob eine zweite dem Engineering-System 100 zugeordnete Kommunikationsnetzadresse bzw. eine zweite dem Automatisierungsgerät 200 zugeordnete Kommunikationsnetzadresse gültig wird, und initiiert bei einer Adress- bzw. Gültigkeitsänderung einen Aufbau der zusätzlichen zweiten Kommunikationsverbindung.

Weist die Transport- und Vermittlungsfunktionseinheit 203 des Automatisierungsgeräts keine Multipath-TCP-Funktionalität auf, oder umfasst das Automatisierungsgerät 200 keine eigene Überwachungseinheit bzw. keinen DNS-Client, können entsprechende Funktionen in den dem Automatisierungsgerät 200 zugeordneten Router 400 ausgelagert werden. Hierzu umfasst der Router 400 vorzugsweise eine Transport- und Vermittlungsfunktionseinheit 401 mit Multipath-TCP-Funktionalität, eine Überwachungseinheit 402 entsprechend obigen Ausführungen sowie einen DNS-Client 403. Somit kann der Router 400 insbesondere Multipath-TCP-Verbindungen für das Automatisierungsgerät 200 terminieren und als einfache TCP-Verbindungen zum Automatisierungsgerät 400 bzw. Kommunikationsgerät des Automatisierungsgeräts 200 weiterführen. Grundsätzlich können in entsprechender Weise auch Funktionen des Engineering-Systems 100 bzw. dessen Kommunikationsgeräts in einen dem Engineering-System 100 zugeordneten Router bzw. in ein Gateway ausgelagert werden. Der Router bzw. das Gateway agiert insofern als Proxy für das Engineering-System 100 bzw. für das Automatisierungsgerät 200.

## Patentansprüche

1. Verfahren zum Aufbau einer unterbrechungsfreien Kommunikationsverbindung mit einem Kommunikationsgerät, das einem industriellen Automatisierungssystem zugeordnet ist, bei dem
- eine erste Kommunikationsverbindung zwischen einem ersten Kommunikationsgerät (100) und einem zweiten Kommunikationsgerät (200) entsprechend einem Übertragungssteuerungsprotokoll unter Verwendung einer dem ersten Kommunikationsgerät zugeordneten ersten Kommunikationsnetzadresse aufgebaut wird,
**dadurch gekennzeichnet, dass**
- eine dem ersten Kommunikationsgerät (100) zugeordnete Überwachungseinheit (105) auf Basis eines Namensauflösungsprotokolls überprüft, ob eine zweite dem ersten Kommunikationsgerät zugeordnete Kommunikationsnetzadresse (100) gültig wird,
- die Überwachungseinheit (105) bei Zuordnung einer zweiten gültigen Kommunikationsnetzadresse und bestehender erster Kommunikationsverbindung einen Aufbau einer zusätzlichen zweiten Kommunikationsverbindung zwischen einer dem ersten Kommunikationsgerät (100) zugeordneten Transport- und/oder Vermittlungsfunktionseinheit (103) und dem zweiten Kommunikationsgerät (200) initiiert,
- die dem ersten Kommunikationsgerät (100) zugeordnete Transport- und/oder Vermittlungsfunktionseinheit (103) die zweite Kommunikationsverbindung unter Verwendung der dem ersten Kommunikationsgerät (100) zugeordneten zweiten Kommunikationsnetzadresse aufbaut,
- die erste Kommunikationsverbindung (100) bei einem erfolgreichen Aufbau der zweiten Kommunikationsverbindung abgebaut wird.

2. Verfahren nach Anspruch 1,
bei dem die erste Kommunikationsverbindung und/oder die zweite Kommunikationsverbindung entsprechend einem verbindungsorientierten Verbindungssteuerungsprotokoll aufgebaut werden/wird.

3. Verfahren nach Anspruch 2,
bei dem die erste Kommunikationsverbindung und/oder die zweite Kommunikationsverbindung entsprechend Transmission Control Protocol aufgebaut werden/wird.

4. Verfahren nach Anspruch 3,
bei dem die Transport- und/oder Vermittlungsfunktionseinheit (103) eine Multipath-TCP-Funktionalität aufweist.

5. Verfahren nach einem der Ansprüche 1 bis 4,
bei dem die Transport- und/oder Vermittlungsfunktionseinheit (103) zur Verarbeitung eines Internetprotokollstapels ausgestaltet und eingerichtet ist.

6. Verfahren nach einem der Ansprüche 1 bis 5,
bei dem die Transport- und/oder Vermittlungsfunktionseinheit (103) in das erste Kommunikationsgerät (100), in einen dem ersten Kommunikationsgerät zugeordneten Router (400) oder in ein dem ersten Kommunikationsgerät (100) zugeordnetes Gateway integriert ist.

7. Verfahren nach einem der Ansprüche 1 bis 5,
bei dem die Transport- und/oder Vermittlungsfunktionseinheit (103) in das erste Kommunikationsgerät (100) integriert ist, und bei dem die Transport- und/oder Vermittlungsfunktionseinheit (103) über einen Kommunikationsnetzadapter-Treiber auf einen Kommunikationsnetzadapter des ersten Kommunikationsgeräts (100) zugreift.

8. Verfahren nach Anspruch 7,
bei dem der Kommunikationsnetzadapter eine Sende- und Empfangseinheit (101) und eine Steuerungseinheit (102) zur Koordination eines Zugriffs auf ein Kommunikationsmedium umfasst.

9. Verfahren nach einem der Ansprüche 1 bis 8,
bei dem der Überwachungseinheit (105) eine Namensauflösungseinheit (106) zugeordnet ist, die anhand eines Namensauflösungsdienstes fortlaufend überprüft, ob eine zweite dem ersten Kommunikationsgerät (100) zugeordnete Kommunikationsnetzadresse gültig wird.

10. Verfahren nach Anspruch 9,
bei dem der Namensauflösungsdienst durch zumindest einen Domain Name System Server (300) bereitgestellt wird, und bei dem die Namensauflösungseinheit (106) ein DNS-Client ist.

11. Verfahren nach Anspruch 10,
bei dem der DNS-Client (106) eine Änderung eines dem ersten Kommunikationsgerät (100) zugeordneten IPv6-Präfix überwacht.

12. Verfahren nach Anspruch 11,
bei dem die Überwachungseinheit (105) bei einer Änderung des IPv6-Präfix den Aufbau der zusätzlichen zweiten Kommunikationsverbindung initiiert.

13. Verfahren nach einem der Ansprüche 1 bis 12,
bei dem die Überwachungseinheit (105) in das erste Kommunikationsgerät, in einen dem ersten Kommunikationsgerät (100) zugeordneten Router (400) oder in ein dem ersten Kommunikationsgerät zugeordnetes Gateway integriert ist.

14. Verfahren nach einem der Ansprüche 1 bis 13,
bei dem das zweite Kommunikationsgerät (200) im wesentlichen wie das erste Kommunikationsgerät (100) ausgestaltet und eingerichtet ist, und bei dem die erste Kommunikationsverbindung unter Verwendung einer dem zweiten Kommunikationsgerät (200) zugeordneten ersten Kommunikationsnetzadresse aufgebaut wird, und bei dem eine dem zweiten Kommunikationsgerät (200) zugeordnete Überwachungseinheit (403) überprüft, ob eine zweite dem zweiten Kommunikationsgerät (200) zugeordnete Kommunikationsnetzadresse gültig wird, und bei einer Adress- und/oder Gültigkeitsänderung einen Aufbau einer zusätzlichen zweiten Kommunikationsverbindung initiiert, und bei dem eine dem zweiten Kommunikationsgerät (200) zugeordnete Transport- und/oder Vermittlungsfunktionseinheit (203) bei einer Adress- und/oder Gültigkeitsänderung die zweite Kommunikationsverbindung unter Verwendung der dem zweiten Kommunikationsgerät (200) zugeordneten zweiten Kommunikationsnetzadresse aufbaut.

15. Verfahren nach Anspruch 14,
bei dem die dem ersten Kommunikationsgerät (100) zugeordnete Überwachungseinheit (105) nur bei einem durch das erste Kommunikationsgerät (100) initiierten Aufbau der ersten Kommunikationsverbindung überprüft, ob eine zweite dem ersten Kommunikationsgerät (100) zugeordnete Kommunikationsnetzadresse und/oder eine zweite dem zweiten Kommunikationsgerät (200) zugeordnete Kommunikationsnetzadresse gültig werden/wird, und bei einer Adress- und/oder Gültigkeitsänderung einen Aufbau einer zusätzlichen zweiten Kommunikationsverbindung initiiert.

16. Verfahren nach Anspruch 14 oder 15,
bei dem die dem zweiten Kommunikationsgerät(200) zugeordnete Überwachungseinheit (403) nur bei einem durch das zweite Kommunikationsgerät (200) initiierten Aufbau der ersten Kommunikationsverbindung überprüft, ob eine zweite dem ersten Kommunikationsgerät (100) zugeordnete Kommunikationsnetzadresse und/oder eine zweite dem zweiten Kommunikationsgerät (200) zugeordnete Kommunikationsnetzadresse gültig werden/wird, und bei einer Adress- und/oder Gültigkeitsänderung einen Aufbau einer zusätzlichen zweiten Kommunikationsverbindung initiiert.

17. Verfahren nach einem der Ansprüche 1 bis 16,
bei dem das erste Kommunikationsgerät (100) und/oder das zweite Kommunikationsgerät (200) dem industriellen Automatisierungssystem zugeordnet sind/ist.

18. Kommunikationsgerät zur Durchführung eines Verfahrens nach einem der Ansprüche 1 bis 17 mit
- zumindest einer Sende- und Empfangseinheit (101),
- zumindest einer Steuerungseinheit (102) zur Koordination eines Zugriffs auf ein Kommunikationsmedium,
**gekennzeichnet durch**
- eine Überwachungseinheit (105) für eine Überprüfung auf Basis eines Namensauflösungsprotokolls, ob eine neue und/oder zusätzliche dem Kommunikationsgerät (100) zugeordnete Kommunikationsnetzadresse gültig wird, wobei die Überwachungseinheit (105) dafür eingerichtet und ausgestaltet ist, bei Zuordnung einer neuen und/oder zusätzlichen gültigen Kommunikationsnetzadresse und einer bestehenden Kommunikationsverbindung mit einem ausgewählten Kommunikationsgerät (200) einen Aufbau einer zusätzlichen Kommunikationsverbindung zwischen einer dem Kommunikationsgerät (100) zugeordneten Transport- und/oder Vermittlungsfunktionseinheit (103) und dem ausgewählten Kommunikationsgerät (200) zu initiieren,
- eine Transport- und/oder Vermittlungsfunktionseinheit (103), die dafür eingerichtet und ausgestaltet ist, die zusätzliche Kommunikationsverbindung unter Verwendung der dem Kommunikationsgerät (100) zugeordneten neuen und/oder zusätzlichen Kommunikationsnetzadresse aufzubauen und die vorher bestehende Kommunikationsverbindung bei einem erfolgreichen Aufbau der zusätzlichen Kommunikationsverbindung abzubauen.

## Claims

1. Method for setting up an uninterrupted communication connection with a communication device which is allocated to an industrial automation system, in which
- a first communication connection is set up between a first communication device (100) and a second communication device (200) according to a transmission control protocol using a first communication network address allocated to the first communication device, **characterized in that**
- a monitoring unit (105) allocated to the first communication device (100) checks on the basis of a name resolution protocol whether a second communication network address (100) allocated to the first communication device becomes valid,
- in the case of an allocation of a second valid communication network address and an existing first communication connection, the monitoring unit (105) initiates a set-up of an additional second communication connection between a transport and/or switching function unit (103) allocated to the first communication device (100) and the second communication device (200),
- the transport and/or switching function unit (103) allocated to the first communication device (100) sets up the second communication connection using the second communication network address allocated to the first communication device (100),
- the first communication connection (100) is cleared down if the second communication connection is successfully set up.

2. Method according to Claim 1,
in which the first communication connection and/or the second communication connection is/are set up according to a connection-oriented connection control protocol.

3. Method according to Claim 2,
in which the first communication connection and/or the second communication connection is/are set up according to a Transmission Control Protocol.

4. Method according to Claim 3,
in which the transport and/or switching function unit (103) has a multipath TCP functionality.

5. Method according to one of Claims 1 to 4,
in which the transport and/or switching function unit (103) is designed and configured to process an Internet protocol stack.

6. Method according to one of Claims 1 to 5,
in which the transport and/or switching function unit (103) is integrated into the first communication device (100), into a router (400) allocated to the first communication device or into a gateway allocated to the first communication device (100).

7. Method according to one of Claims 1 to 5,
in which the transport and/or switching function unit (103) is integrated into the first communication device (100), and in which the transport and/or switching function unit (103) accesses a communication network adapter of the first communication device (100) via a communication network adapter driver.

8. Method according to Claim 7,
in which the communication network adapter comprises a transceiver unit (101) and a control unit (102) for coordinating access to a communication medium.

9. Method according to one of Claims 1 to 8,
in which a name resolution unit (106) is allocated to the monitoring unit (105), said name resolution unit checking continuously on the basis of a name resolution service whether a second communication network address allocated to the first communication device (100) becomes valid.

10. Method according to Claim 9,
in which the name resolution service is provided by at least one Domain Name System Server (300), and in which the name resolution unit (106) is a DNS client.

11. Method according to Claim 10,
in which the DNS client (106) monitors a change of an IPv6 prefix allocated to the first communication device (100).

12. Method according to Claim 11,
in which, in the event of a change of the IPv6 prefix, the monitoring unit (105) initiates the set-up of the additional second communication connection.

13. Method according to one of Claims 1 to 12,
in which the monitoring unit (105) is integrated into the first communication device, into a router (400) allocated to the first communication device (100) or into a gateway allocated to the first communication device.

14. Method according to one of Claims 1 to 13,
in which the second communication device (200) is essentially designed and configured in the same way as the first communication device (100), and in which the first communication connection is set up using a first communication network address allocated to the second communication device (200), and in which a monitoring unit (403) allocated to the second communication device (200) checks whether a second communication network address allocated to the second communication device (200) becomes valid, and, in the event of an address change and/or validity change, initiates a set-up of an additional second communication connection, and in which a transport and/or switching function unit (203) allocated to the second communication device (200), in the event of an address change and/or validity change, sets up the second communication connection using the second communication network address allocated to the second communication device (200).

15. Method according to Claim 14,
in which the monitoring unit (105) allocated to the first communication device (100) checks, only in the case of a set-up of the first communication connection initiated by the first communication device (100), whether a second communication network address allocated to the first communication device (100) and/or a second communication network address allocated to the second communication device (200) become(s) valid, and, in the event of an address change and/or validity change, initiates a set-up of an additional second communication connection.

16. Method according to Claim 14 or 15,
in which the monitoring unit (403) allocated to the second communication device (200) checks, only in the case of a set-up of the first communication connection initiated by the second communication device (200), whether a second communication network address allocated to the first communication device (100) and/or a second communication network address allocated to the second communication device (200) become(s) valid, and, in the event of an address change and/or validity change, initiates a set-up of an additional second communication connection.

17. Method according to one of Claims 1 to 16,
in which the first communication device (100) and/or the second communication device (200) is/are allocated to the industrial automation system.

18. Communication device to carry out a method according to one of Claims 1 to 17, with
- at least one transceiver unit (101),
- at least one control unit (102) for coordinating access to a communication medium,
**characterized by**
- a monitoring unit (105) for checking on the basis of a name resolution protocol whether a new and/or additional communication network address allocated to the communication device (100) becomes valid, wherein the monitoring unit (105) is configured and designed, in the case of an allocation of a new and/or additional valid communication network address and an existing communication connection to a selected communication device (200), to initiate a set-up of an additional communication connection between a transport and/or switching function unit (103) allocated to the communication device (100) and the selected communication device (200),
- a transport and/or switching function unit (103) which is configured and designed to set up the additional communication connection using the new and/or additional communication network address allocated to the communication device (100) and to clear down the previously existing communication connection if the additional communication connection is successfully set up.

## Revendications

1. Procédé d'établissement d'une liaison de communication sans interruption avec un appareil de communication, qui est affecté à un système d'automatisation industriel, dans lequel
- on établit une première liaison de communication entre un premier appareil (100) de communication et un deuxième appareil (200) de communication, conformément à un protocole de commande de transmission, en utilisant une première adresse dans le réseau de communication affectée au premier appareil de communication,
**caractérisé en ce que**
- on contrôle une première unité (105) de contrôle, affectée au premier appareil (100) de communication, sur la base d'un protocole de résolution de dénomination, sur le point de savoir si est valable une deuxième adresse (100) dans le réseau de communication, affectée au premier appareil de communication,
- l'unité (105) de contrôle fait débuter, si l'affectation d'une deuxième adresse dans le réseau de communication est valable et s'il existe une première liaison de communication, un établissement d'une deuxième liaison de communication supplémentaire, entre une unité (103) fonctionnelle de transport et/ou de commutation, affectée au premier appareil (100) de communication, et le deuxième appareil (200) de communication,
- l'unité (103) fonctionnelle de transport et/ou de commutation, affectée au premier appareil (100) de communication, établit la deuxième liaison de communication en utilisant la deuxième adresse dans le réseau de communication affectée au premier appareil (100) de communication,
- on établit la première liaison (100) de communication si l'établissement de la deuxième liaison de communication est couronné de succès.

2. Procédé suivant la revendication 1,
dans lequel on établit la première liaison de communication et/ou la deuxième liaison de communication, conformément à un protocole de commande de liaison à orientation liaison.

3. Procédé suivant la revendication 2,
dans lequel on établit la première liaison de communication et/ou la deuxième liaison de communication, conformément au transmission control protocol.

4. Procédé suivant la revendication 3,
dans lequel l'unité (103) fonctionnelle de transport et/ou de commutation a une fonctionnalité multipasse-TCP.

5. Procédé suivant l'une des revendications 1 à 4,
dans lequel l'unité (103) fonctionnelle de transport et/ou de commutation est conformée et conçue pour traiter une pile de protocoles internet.

6. Procédé suivant l'une des revendications 1 à 5,
dans lequel l'unité ( 103) fonctionnelle de transport et/ou de commutation est intégrée dans le premier appareil (100) de communication, dans un routeur (400) affecté au premier appareil de communication, ou dans un gateway affecté au premier appareil (100) de communication.

7. Procédé suivant l'une des revendications 1 à 5,
dans lequel l'unité (103) fonctionnelle de transport et/ou de commutation est intégrée dans le premier appareil (100) de communication et dans lequel l'unité (103) fonctionnelle de transport et/ou de commutation accède, par un pilote d'adaptateur de réseau de communication, à un adaptateur de réseau de communication du premier appareil (100) de communication.

8. Procédé suivant la revendication 7,
dans lequel l'adaptateur du réseau de communication comprend une unité (101) d'émission et de réception et une unité (102) de commande, pour coordonner un accès à un support de communication.

9. Procédé suivant l'une des revendications 1 à 8,
dans lequel, à l'unité (105) de contrôle, est affectée une unité (106) de résolution de dénomination, qui, à l'aide d'un service de résolution de dénomination, contrôle en permanence si est valable une deuxième adresse dans le réseau de communication, affectée au premier appareil (100) de communication.

10. Procédé suivant la revendication 9,
dans lequel le service de résolution de dénomination est mis à disposition par au moins un serveur (300) de système de nom de domaine et dans lequel l'unité (106) de résolution de dénomination est un client DNS.

11. Procédé suivant la revendication 10,
dans lequel le client (106) DNS contrôle une modification du préfixe IPv6 affecté au premier appareil (100) de communication.

12. Procédé suivant la revendication 11,
dans lequel l'unité (105) de contrôle fait débuter, s'il se produit une modification du préfixe IPv6, l'établissement de la deuxième liaison de communication supplémentaire.

13. Procédé suivant l'une des revendications 1 à 12,
dans lequel l'unité (105) de contrôle est intégrée dans le premier appareil de communication, dans un routeur (400) affecté au premier appareil (100) de communication ou dans un gateway affecté au premier appareil de communication.

14. Procédé suivant l'une des revendications 1 à 13,
dans lequel le deuxième appareil (200) de communication est conformé et agencé sensiblement comme le premier appareil (100) de communication, et dans lequel on établit la première liaison de communication en utilisant une première adresse dans le réseau de communication, affectée au deuxième appareil (200) de communication, et dans lequel une unité (403) de contrôle, affectée au deuxième appareil (200) de communication, contrôle si est valable une deuxième adresse dans le réseau de communication, affectée au deuxième appareil (200) de communication et, s'il se produit une modification d'adresse et/ou de validité, fait débuter l'établissement d'une deuxième liaison de communication supplémentaire, et dans lequel une unité (203) fonctionnelle de transport et/ou de commutation, affectée au deuxième appareil (200) de communication, établit, s'il se produit une modification d'adresse et/ou de validité, la première liaison de communication, en utilisant la deuxième adresse dans le réseau de communication, affectée au deuxième appareil (200) de communication.

15. Procédé suivant la revendication 14,
dans lequel l'unité (105) de contrôle, affectée au premier appareil (100) de communication, contrôle, seulement lors d'un établissement, initié par le premier appareil (100) de communication, de la première liaison de communication, si une deuxième adresse dans le réseau de communication, affectée au premier appareil (100) de communication, et/ou une deuxième adresse dans le réseau de communication, affectée au deuxième appareil (200) de communication, est valable et, s'il se produit une modification d'adresse et/ou de validité, fait débuter l'établissement d'une deuxième liaison de communication supplémentaire.

16. Procédé suivant la revendication 14 ou 15,
dans lequel l'unité (403) de contrôle, affectée au deuxième appareil (200) de communication, contrôle, seulement lors d'un établissement initié par le deuxième appareil (200) de communication de la première liaison de communication, si une deuxième adresse dans le réseau de communication, affectée au premier appareil (100) de communication, et/ou une deuxième adresse dans le réseau de communication, affectée au deuxième appareil (200) de communication, est valable et, s'il se produit une modification d'adresse et/ou de validité, fait débuter l'établissement d'une deuxième liaison de communication supplémentaire.

17. Procédé suivant l'une des revendications 1 à 16,
dans lequel le premier appareil (100) de communication et/ou le deuxième appareil (200) de communication sont/est affecté au système d'automatisation industriel.

18. Appareil de communication pour effectuer un procédé suivant l'une des revendications 1 à 17, comprenant
- au moins une unité (101) d'émission et de réception,
- au moins une unité (102) de commande pour coordonner un accès à un support de communication,
**caractérisé par**
- une unité (105) de contrôle pour contrôler, sur la base d'un protocole de résolution de dénomination, si une adresse nouvelle et/ou supplémentaire dans le réseau de communication, affectée à l'appareil (100) de communication, est valable, dans lequel l'unité (105) de contrôle est agencée et conformée pour, s'il est affectée une adresse dans le réseau de communication valable, nouvelle et/ou supplémentaire, et s'il existe une liaison de communication avec un appareil (200) de communication sélectionné, faire débuter l'établissement d'une liaison de communication supplémentaire entre une unité (103) fonctionnelle de transport et/ou de commutation affectée à l'appareil (100) de communication, et l'appareil (200) de communication sélectionné,
- une unité (103) fonctionnelle de transport et/ou de commutation agencée et conformée pour établir la liaison de communication supplémentaire, en utilisant l'adresse, dans le réseau de communication, nouvelle et/ou supplémentaire, affectée à l'appareil (100) de communication, et faire cesser la liaison de communication existante jusqu'ici, si l'établissement de la liaison de communication supplémentaire est couronné de succès.
